# EUROPÄISCHE PATENTSCHRIFT

(11) **EP 1 404 484 B1**
(45) Veröffentlichungstag und Bekanntmachung des Hinweises auf die Patenterteilung: **11.04.2007**
(21) Anmeldenummer: 02753884.2
(22) Anmeldetag: 24.06.2002
(51) Int. Cl.: B23P 15/28, B23K 26/14

(54) **BANDFÖRMIGE SCHNEIDWERKZEUGE**
STRIP-SHAPED CUTTING TOOLS
OUTIL DE COUPE EN FORME DE BANDE

(30) Priorität: 25.06.2001 AT 9742001
(43) Veröffentlichungstag der Anmeldung: 07.04.2004
(73) Patentinhaber: BÖHLER-UDDEHOLM Precision Strip GmbH & Co KG, 3333 Böhlerwerk (AT)
(72) Erfinder: PONEMAYR, Helmut, A-9545 Gradentheil (AT)
(74) Vertreter: Patentanwälte BARGER, PISO & PARTNER
(86) Internationale Anmeldenummer: PCT/AT2002/000180
(87) Internationale Veröffentlichungsnummer: WO 2003/000457

(56) Entgegenhaltungen:
- EP-A- 0 078 254
- EP-A- 0 278 330
- EP-A- 0 569 346
- DE-A- 3 216 456
- DE-B- 1 254 936
- RU-C- 2 087 238
- US-A- 4 644 127
- US-A- 6 146 476

## Beschreibung

Die Erfindung betrifft ein Verfahren zur Herstellung eines Zerspanungswerkzeuges, insbesondere Sägen, Schneidlinien oder Stanzmesser, bestehend aus einem bandförmigen oder scheibenförmigen Trägermaterial, auf dessen auf im wesentlichen hochkant stehende Kante ein Schneidenbereich in Form einer pulverförmigen Legierung aufgebracht und im Zuge des Aufbringens, bevorzugt mittels Laserstrahles, geschmolzen wird und auf der Kante erstarrt.
Ein solches, dem einleitenden Teil des Anspruches 1 entsprechendes Verfahren ist aus der DE 32 16 456 A bekannt, wobei allerdings sogenannter Hartstoff in den aufgeschmolzenen Bereich eingebracht wird, der durchgehend fest bleibt und mit dem Trägermaterial keine Legierung bildet. Die US 6,146,476 A offenbart ein solches Verfahren, bei dem eine Schneide auf ein Werkzeug aufgebracht wird, mit Ausbildung einer Legierungszone.
Insbesondere Bandsägen zur Metallbearbeitung müssen eine ganze Reihe von Anforderungen erfüllen, um ökonomisch verwendbar zu sein: Das Bandmaterial muß flexibel und elastisch sein, es muß nicht nur die Zugspannungen aufnehmen und ertragen können, denen das Sägeband schon von seiner Montage her ausgesetzt ist, sondern es muß darüber hinaus auch die das Band auf Biegung beanspruchenden Kräfte während des Sägevorganges und die Torsionsmomente und -spannungen ertragen, die das Band bei der Drehung um seine Längsachse oberhalb und unterhalb des Schneidtisches bzw. vor und nach der Schneidstelle erfährt. Zu all dem kommen stoßende und ratternde, somit dynamische Beanspruchungen durch den Eingriff der einzelnen Zähne ins zu bearbeitende Material und nicht zuletzt die thermische Belastung, die im Zahnbereich und insbesondere an den Zahnspitzen 600°C und mehr erreichen kann. Da die Kühlung des Bandes eine Abfuhr dieser Wärme bewirkt, kommt es nicht nur zu dieser thermischen Belastung, sondern auch zur Ausbildung eines Temperaturgradienten und den damit zusammenhängenden thermischen Spannungen, die sich den mechanischen und insbesondere dynamischen Beanspruchungen überlagern.
Die eingangs genannten Verfahren und die zugehörigen Vorrichtungen werden in letzter Zeit vermehrt verwendet, um auf Trägermaterialien mit bestimmten mechanischen Eigenschaften, insbesondere hoher Zähigkeit und guter Biegsamkeit, Schneiden aufzubringen, die nicht nur gute Schneidfähigkeit, sondern auch hohe Verschleißfestigkeit und andere Eigenschaften aufweisen, die von denen des Trägermaterials wesentlich abweichen.
Dadurch wird es möglich, Legierungen und Verbundmaterialien zu schaffen, die mittels klassischer Verfahren, beispielsweise durch Aufschweißen eines Flachdrahtes auf ein Trägermaterial, nicht hergestellt werden können.
Dabei wird üblicherweise so vorgegangen, dass das pulverförmige Material mit Hilfe eines Gasstromes auf die jeweils gewünschte Stelle aufgebracht wird und dabei, teils im Flug, teils im aufgetroffenen Zustand durch einen Hochenergiestrahl, zumeist einen Laserstrahl, aufgeschmolzen wird, so dass es zu einem Schweißvorgang zwischen dem aufschmelzenden pulverförmigen Material und dem Randbereich des Trägermaterials kommt, wodurch das gewünschte Verbundmaterial geschaffen wird. Dabei wird zwischen Trägermaterial und der Aufbringstelle eine Relativbewegung aufrechterhalten (ähnlich dem herkömmlichen Schweißen), durch die es zur Ausbildung des gewünschten Streifens aus Pulvermaterial auf dem Trägermaterial kommt. Es ist auch möglich, diesen Vorgang zu wiederholen und so zu mehrlagigen Gebilden zu kommen, wobei die einzelnen aufeinanderfolgenden Lagen gleiche oder voneinander unterschiedliche chemische Zusammensetzungen aufweisen können.
Im Zusammenhang mit dieser Technologie sei ganz global auf die EP 0 931 180 B1, die DE 199 09 390 C1 und die DE 25 42 001 A1 verwiesen. Weiter abseits liegender Stand der Technik, der sich mit der Schaffung aufgesinterter Schichten bzw. dem Verschweißen des Trägermaterials mit einem Flachdraht beschäftigt und der besonders gut verwendbare Legierungen nennt, sind die DE 125 49 36 A, die EP 0 078 254 A2 und die AT 396 560 B. Die JP 62083480 A beschäftigt sich mit dem Aufbringen von Pulver aus harten Partikeln auf die Oberfläche eines Körpers durch Rollen des rotglühenden Körpers im Pulver und anschließendes Eindrücken des Pulvers, die US 5,837,960 A beschäftigt sich mit dem Aufbringen von Pulver auf ein Substrat unter dem Einfluß eines Laserstrahls, um Schicht für Schicht einen Gegenstand aufzubauen, wobei die erzielten Aufbaugeschwindigkeiten im Bereich von einigen Gramm pro Minute liegen, somit nur für feinstmechanische Probleme verwendbar sind.
Die WO 93/21360 A schmilzt mittels Lasers die Oberflächenschicht eines beschichteten Werkstückes auf, um mittels der so erreichten Umschmelzung zu gewünschten Oberflächeneigenschaften zu kommen.

Ein anderer Weg ist in der US 4,488,882 A, entsprechend der genannten DE 32 16 456 A1, beschrieben: Es wird dabei ein Schneidenbereich eines Schneidwerkzeuges mittels Laserstrahls erweicht und in die so erweichten Bereiche werden Partikel aus Wolframcarbid oder andere Hartstoffe eingebracht, die eine Größe von 0,3 mm bis 1,5 mm aufweisen- Es dient hier das Grundmaterial des Schneidwerkzeuges als Matrix, ähnlich wie bei einer Schleifscheibe, in der die eigentlich spanenden Partikel sitzen. Für Sägen mit im Vergleich dazu "maloroskopisdhen", vor aber allem mit geometrisch definierten spanabhebenden Bereichen, aber auch für Schneidlinien etc. ist dieser Vorschlag völlig unbrauchbar.
Wie aus obiger kurzer Schilderung hervorgeht, erfolgte die Ausbildung des Bereiches, der aus dem pulverförmigen Material besteht, und die Verbindung mit dem Trägerband, im folgenden kurz "Schneide" genannt, durch das Aufschmelzen des Pulvers und eines dünnen. Bereiches der Kante des Trägerbandes, somit durch ein Verfahren, das metallurgisch einem Schweißverfahren ähnlich ist. Ähnlich einem Schweißverfahren ist auch die thermische Belastung des Materials und ähnlich, wie bei einer Schweißnaht, sind auch beim Auflegieren des Pulvers verschiedene Gefügeausbildungen während des Erstarrens des aufgebrachten und für kurze Zeit verflüssigten Pulvers und des Randbereiches des Trägermaterials die Folge.
Als augenfälligste Erscheinung und mit bloßem Auge sichtbar ist die äußere Form des aufgeschmolzenen Pulvers nach seinem Wiedererstarren, da es durch die große Oberflächenspannung, die für geschmolzene Metalle typisch ist, zur Ausbildung eines im Querschnitt praktisch kreisförmigen, insgesamt somit stabförmigen Gebildes auf der Kante des Trägermaterials kommt.
Im Zuge des Erstarrens kommt es im Kleinen zu all den Besonderheiten und metallurgischen Vorgängen, wie sie beispielsweise vom Gießen von Blöcken oder vom Stranggießen her im Großen bekannt sind, so zur Ausbildung eines speziellen Gußgefüges u.dgl. mehr.
Bei der Weiterverarbeitung dieser Rohlinge wird das seitlich überstehende, rundstabartige Gebilde durch einen spanenden oder schleifenden Arbeitsschritt abgetragen und die Schneide in die gewünschte Form gebracht. Da das stabartige Gebilde, wie oben ausgeführt, aus einem besonders widerstandsfähigen und für die Ausbildung einer Schneide bestmöglich geeignetem Material besteht, ist diese spanende oder schleifende Bearbeitung auswendig und kostspielig.

Die Erfindung hat das Ziel, ein Verfahren und eine Vorrichtung zur Durchführung eines Verfahrens anzugeben, durch das die metallurgischen und physikalischen Eigenschaften des fertigen Gegenstandes, insbesondere in seinem Schneidenbereich, deutlich verbessert werden und das auch im industriellen Maßstab wirtschaftlich durchführbar ist.
Erfindungsgemäß geschieht dies entsprechend den kennzeichnenden Merkmalen des Anspruches 1 dadurch, dass in dem Bereich des Trägerbandes mit bereits aufgebrachtem aufgeschmolzenen pulverförmigem Material, in dem dessen Erstarrung stattfindet, der im wesentlichen kreissegmentförmigen Querschnitt aufweisende und über die Seitenfläche des Trägerbandes vorstehende Schneidenbereich durch Warmumformung in die gewünschte Form, zumeist im wesentlichen in Flucht mit den beiden Seitenebenen des Trägerbandes, gebracht wird.
Durch diese Maßnahme erreicht man einerseits, dass bei der nachfolgenden Endherstellung der Schneide nur wenig oder kein Material seitlich des Trägerbandes abgetragen werden muß und dass andererseits durch die Warmumformung (hot working), das sich im Zuge des Erstarrens gebildete Gußgefüge mit netzartiger Struktur zumindest zum Teil zerstört, nämlich zertrümmert wird und man ein Gefüge erhält, dessen Eigenschaften, insbesondere dessen Duktilität, gegenüber dem ursprünglichen Gefüge wesentlich verbessert ist.
Es ist selbstverständlich nicht notwendig (und in vielen Fällen auch nicht erwünscht), ein mit den Seitenebenen des Trägerbandes genau fluchtendes Gebilde des Schneidenbereiches zu schaffen, es ist bei Verwendung von Walzen zur Umformung des eben erstarrten Schneidenbereiches auch möglich, konische oder gestufte Walzen zu verwenden, um einen gewünschten Querschnitt zu erreichen, auch ist es möglich, Walzen zu verwenden, die über ihren Umfang unterschiedliche Durchmesser aufweisen und so eine Art "Schränkung" zu schaffen. Unter Schränkung wird sowohl eine über die Länge des Trägerbandes variable Dicke des erhaltenen Schneidenbereiches als auch eine abwechselnd mehr zur einen Seite und mehr zur anderen Seite gerichtete Verformung des Schneidenbereiches verstanden.
Die Walzen bedürfen selbstverständlich intensiver Kühlung und müssen mit einer passenden Oberfläche für die Beanspruchung, der sie ausgesetzt sind, ausgestattet sein, doch ist es für den Fachmann auf dem Gebiete der Warmumformung in Kenntnis der Erfindung ohne weiteres möglich, entsprechende Materialien und Oberflächenbeschaffenheit auszuwählen.

Die Erfindung wird im Folgenden an Hand der Zeichnung näher erläutert. Dabei zeigt
die Fig. 1 rein schematisch einen Querschnitt durch ein Trägerband und einen daran durch das eingangs erwähnte Verfahren aufgeschmolzenen Schneidenbereich, wie er unmittelbar nach Durchführung des Verfahrens erhalten wird,
die Fig. 2 zeigt rein schematisch eine Draufsicht auf eine erfindungsgemäße Anordnung und
die Fig. 3 zeigt, ebenfalls rein schematisch, eine mögliche Querschnittsform, wie man sie nach Durchführung des erfindungsgemäßen Verfahrens erhält.

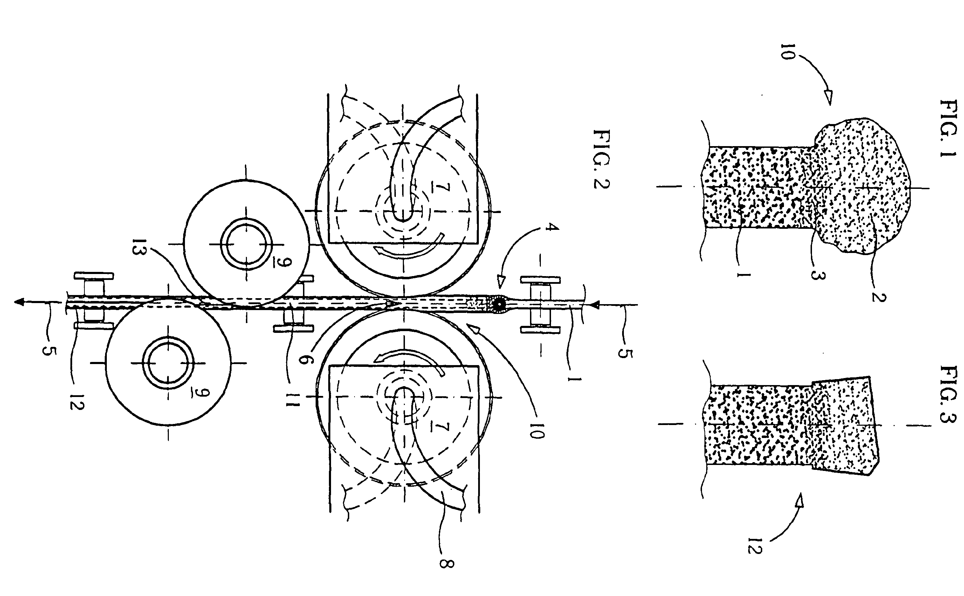

Die Fig. 1 zeigt einen Rohling 10, bestehend aus einem Trägerband 1 mit einem darauf durch Laserlegieren aufgebrachten Schneidenbereich 2. Dieser Schneidenbereich 2 weist zufolge der hohen Oberflächenspannung des geschmolzenen Metalles einen nahezu kreisförmigen Querschnitt auf. In einem Übergangsbereich 3 zwischen dem Trägerband 1 und dem Schneidenbereich 2 ändert sich die Zusammensetzung des Rohlings 10 sukzessive von der Legierung des Trägerbandes 1 zur Legierung des Schneidenbereiches 2, was durch die unterschiedlichen Schraffuren angedeutet ist.
Dabei weist sowohl der Übergangsbereich 3 als auch der Schneidenbereich 2 im wesentlichen ein Gußgefüge auf, da ja diese Bereiche aus der Schmelze durch Erstarren entstanden sind. Dieses Gefüge und die Form und Größe des Querschnittes positiv zu ändern ist das Ziel der Erfindung und wird folgendermaßen erreicht:
Das Trägerband 1 wird, in hochkant gestellter Positionierung, in Richtung des Pfeiles 5 der Aufschweißstelle 4 zugeführt, an der auf an sich bekannte Weise Metallpulver entsprechend der gewünschten Zusammensetzung des Schneidenbereiches 2 dem Trägerband zugeführt und durch einen Hochenergiestrahl, zumeist einen Laserstrahl, aufgeschmolzen wird. Es wurde in der Darstellung aus Gründen der Übersichtlichkeit auf Details wie die Ausbildung der Schütte oder Düse für das Pulver und die Anbringung und Kühlung für den Laser und die Schaffung einer Inertgasatmosphäre im Bereich der Aufschweißstelle 4 verzichtet.

Unmittelbar nach Verlassen der Aufschweißstelle 4 liegt der Rohling 10 gemäß Fig. 1 vor und weist eine Temperatur knapp unterhalb des Schmelzpunktes der Legierung des Schneidenbereiches 2 auf. Mit dieser Temperatur gelangt der Rohling in den Umformbereich 6, in dem das Gußgefüge und der Querschnitt des Schneidenbereiches 2 verändert wird. Im Umformbereich 6 sind zwei Rollen oder Walzen 7 angeordnet, deren Abstand voneinander im Schneidenbereich der gewünschten Stärke des Schneidenbereiches zumindest im wesentlichen entspricht, eventuell mit einem geringen Übermaß für die anschließende Endbehandlung. Es müssen die beiden Walzen 7 in diesem Bereich nicht zylindrisch sein, sondern es kann, wie rein schematisch in Fig. 3 angedeutet, durch eine kegelige Ausbildung der Walzen 7 in diesem Bereich, eine ganze Anzahl von Formen und Abmessungen geschaffen werden.
Die Walzen 7 werden gekühlt, bevorzugt innengekühlt, wie durch Leitungsabschnitte 8 angedeutet ist. Die Walzen 7 müssen bei den herrschenden Temperaturen den durch die Zusammensetzung des Rohlings 10 und die angestrebte Formänderung des Schneidenbereiches 2 grundsätzlich bestimmten Kräften widerstehen können, was durch entsprechende Dimensionierung und Oberflächenbeschaffenheit erreicht wird. Auch eine zusätzliche Außenkühlung, gegebenenfalls sogar mit flüssigem Stickstoff, ist möglich.
Aus dem Umformbereich 6 tritt ein Halbprodukt 11 aus, das bereits das gewünschte Gefüge und zumindest im wesentlichen den gewünschten Querschnitt aufweist. Im gezeigten Ausführungsbeispiel ist unmittelbar hinter dem Umformbereich 6 ein Finalbereich 13 vorgesehen, in dem mittels zweier Schleifscheiben 9 der Schneidenbereich 2 in die gewünschte Endform gebracht wird. Da das Halbprodukt 11 bereits im wesentlichen den gewünschten Querschnitt aufweist (mit einem Übermaß, das auf eventuelle Querschnittsreduktionen des Rohlings Bedacht nimmt, aber wegen der Unterschiede zumindest teilweise ausgleichenden Umformung des Rohlings 10 im Umformbereich 6 gering sein kann), ist das abzutragende Volumen um Größenordnungen kleiner als es gemäß dem Stand der Technik der Fall ist.
Die Erfindung ist nicht auf das dargestellte Ausführungsbeispiel beschränkt, sondern kann verschiedentilch abgewandelt werden. So ist es möglich, zusätzlich zu den beiden Walzen 7 eine dünne Scheibe bzw. eine Scheibe mit dünnem Rand von oben her in den Bereich zwischen den beiden Walzen 7 eintauchen zu lassen und so auch den Kopfbereich des Schneidenbereiches 2 entsprechend stark zu verformen, um das Gußgefüge zu zerstören.

Dies kann insbesondere dann vorteilhaft sein, wenn, beispielsweise bei der Sägenherstellung, die oben erwähnte "Schränkung" angestrebt wird, die durch eine Scheibe mit entsprechend geformtem Rand in Verbindung mit entsprechend unrund ausgebildeten Walzen 7 eine solche Form schafft. In diesem Fall ist es notwendig, die beiden Walzen 7 durch Zahnräder od.dergl. in Ihrer Drehung zu synchronisieren, um die gewünschte Form zuverläßig zu erhalten. In diesem Fall wird der Finalbereich 13, soferne er überhaupt vorgesehen ist, eine andere Ausstattung haben, beispielsweise mit Formfräsern od. geformten Schleifscheiben.
Eine andere Ausgestaltung betrifft die Möglichkeit, an Stelle des Finalbereiches 13 eine weitere thermische Bearbeitung vorzusehen, beispielsweise eine induktive Erwärmung des Schneidenbereiches, gegebenenfalls mit nachfolgendem Kaltwalzen (das wäre u.U. auch ohne vorherige Erwärmung möglich) vor dem anschließenden Schleifen.
Für den Fachmann ist es in Kenntnis der Erfindung ein Leichtes, das notwendige Ausmaß der Umformung zur Zerstörung des Gußgefüges zu bestimmen und dem Schneidenbereich aufzuprägen.
Rein illustrativ soll über die verwendbaren Werkstoffe folgendes ausgeführt werden: Als Grundwerkstoff können alle bekannten und im Zusammenhang mit Bimetallsägen als Material für die Trägerbänder verwendeten Werkstoffe eingesetzt werden. Als Beispiel sei auf die folgende Übersicht von Grenzwerten verwiesen:

| Bestandteil | Gew.-% |
|---|---|
| C | 0,15 - 0,60 |
| Si | < 1,5 |
| Mn | < 1,5 |
| Cr | 0,5 - 6,5 |
| Mo | 0,5 - 3 |
| W | < 4 |
| V | 0,03 - 0,75 |
| Nb | < 0,15 |
| Ni | < 2,0 |
| Al | < 0,15 |
| Co | < 4,2 |
| Zr u/o Ti u/o Ta | < 0,01 |
| B | < 0,001 |
| Fc | Rest |

Mit der Maßgabe, dass 0,5 < Mo + W/2 < 3, und dass 0,03 < V + Nb/2 < 0,75 ist. Als Einzelbeispiel sei eine Legierung mit: 0,34 % C; 0,2 % Si; 0,4 % Mn; 2,9 % Cr; 1 % Mo; 0,4 % Ni; 0,23 % V; 0,1 % W; 0,6 % Al genannt. Der Rest auf 100 Gew.-% in der chemischen Zusammensetzung dieser Legierungen bildet Fe und erschmelzungsbedingte Verunreinigungen.
Die einzublasenden pulverigen Bestandteile weisen bevorzugt eine Größe von 300 µm oder darunter auf. Es kann sich dabei um Werkstoffpulver auf Fe-, Ni-, Co-, Ti- Basis, deren Mischungen aber auch um pulvermetallurgische Schnellarbeitsstähle, Stellite sowie Carbide, Nitride, Boride, Oxide deren Mischungen mit den oben angeführten Fe-, Ni-, Co-, Ti-Basislegierungen, PM-HSS, Stelliten etc. sogenannte Hartstoffsysteme, handeln.
Es können die erfindungsgemäß hergestellten Rohlinge einer Wärmebehandlung unterzogen werden, beispielsweise einem Härten, gefolgt von einem Anlassen, wie bei Schnellarbeitsstählen üblich. Als Beispiel sei Austenitisieren bei etwa 1200°C für etwa 2 Minuten und Anlassen bei 540°C genannt. Bei Legierungen, die ausscheidungshärtbaren Werkstoffen entsprechen (Z.Bsp. Fe-, Ni-, Co- Basislegicrungen) kann ein Lösungsglühen zwischen 1000 und 1200 °C und anschließendes Warmauslagern bei 450 bis 750°C zur Bildung der gewünschten intermetallischen Phasen führen.
Es ist selbstverständlich möglich, ohne thermische Nachbchandlung auszukommen, wenn das Trägerband schon vor dem Auflegieren des Zahnspitzenbereiches bzw. Schneidenbereiches die gewünschten Eigenschaften aufweist und die Zusammensetzung stimmt.
Als Hochenergiestrahlwerkzeuge werden bevorzugt Laser verwendet. Es können dabei prinzipiell alle bekannten Lasertypen verwendet werden, wegen der guten Strahlqualität und Leistungsfahigkeit werden die CO2-Laser bevorzugt Es zeichnet sich aber bereits jetzt ab. dass die Diodenlaser bereits in nicht zu ferner Zukunft eine ernst zu nehmende Alternative darstellen werden Wenn es besonders auf die Möglichkeit ankommt, den Laserstrahl mittels Glasfasern zu fuhren, sind insbesondere auch Nd-YAG Laser verwendbar.
Es können selbstverständlich auch andere Energiestrahlen wie Elektronenstrahlen eingesetzt werden, doch werden wegen der hohen und dabei gut regelbaren Intensität die Laserstrahlen bevorzugt.
Im allgemeinen werden im Falle von Sägen die Rohlinge, wie sie in dieser Anmeldung beschrieben werden, an die eigentlichen Sägenhersteller geliefert, die aus den Rohlingen die Zähne herausarbeiten und die notwendigen Ablängungen vornehmen. Es gibt selbstverständlich auch Fälle, in denen direkt im Anschluß an die Herstellung des Rohlings die Endfertigung vorgenommen wird.
Das Aufbringen des pulvrigen Bestandteiles kann über die gesamte Länge des Trägerbandes durchgehend erfolgen, es kann aber auch abschnittsweise vorgenommen werden, wobei nur in den Bereichen Pulver auf das Trägerband geschweißt wird, in denen beim fertigen Schneidwerkzeug die Schneiden bzw. Zahnspitzen vorgesehen sind. Es kann auf diese Weise Pulver gespart werden, es ist weniger Energie zum Aufschweißen des Pulvers notwendig und es kann die globale Vorschubgeschwindigkeit bei der Herstellung erhöht werden, wenn die Bereiche, in denen kein Pulver aufgebracht wird, rascher durchfahren werden.

## Patentansprüche

1. Verfahren zur Herstellung eines Zerspanungswerkzeuges, insbesondere Sägen, Schneidlinien oder Stanzmesser, bestehend aus einem bandförmigen oder scheibenförmigen Trägermaterial (1), auf dessen auf im wesentlichen hochkant stehende Kante ein Schneidenbereich (2) in Form einer pulverförmigen Legierung aufgebracht und im Zuge des Aufbringens, bevorzugt mittels Laserstrahles, geschmolzen wird und auf der Kante erstarrt, **dadurch gekennzeichnet, dass** in dem Bereich des Trägermaterials (1) mit bereits aufgebrachtem pulverförmigem Material, in dem dessen Erstarrung stattfindet, der Schneidenbereich einer Warmumformung unterworfen wird.

2. Verfahren nach Anspruch 1, **dadurch gekennzeichnet, dass** die Warmumformung die Außenkontur des Schneidenbereiches zumindest im Wesentlichen die über die Dicke des Trägermaterials überstehenden Bereiche erfaßt.

3. Verfahren nach Anspruch 1 oder 2, **dadurch gekennzeichnet, dass** die Warmumformung die Außenkontur des Schneidenbereiches im Wesentlichen in die gewünschte Endform bringt.

4. Verfahren nach einem der voranstehenden Ansprüche, **dadurch gekennzeichnet, dass** anschließend an die Warmumformung eine Erwärmung zumindest des Schneidenbereiches (2) und/oder ein Kaltwalzen und/oder ein Schleifen erfolgt.

5. Vorrichtung zur Durchführung des Verfahrens nach einem der Ansprüche 1 bis 4, **dadurch gekennzeichnet, dass**, in Richtung der Relativbewegung zwischen dem Trägermaterial und der Aufschweißstelle (4) des Metallpulvers gesehen, hinter der Aufschweißstelle (4) eine Umformstelle (6) vorgesehen ist, in der der Schneidenbereich (2) des Rohlings (10) durch Rollen bzw. Walzen (7) warmumgeformt wird.

6. Vorrichtung nach Anspruch 5, **dadurch gekennzeichnet, dass** die Umformstelle (6) in einem Bereich angeordnet ist, in der der Schneidenbereich (2) des Rohlings (10) eine Temperatur knapp unterhalb der Schmelztemperatur seiner Legierung aufweist.

7. Vorrichtung nach einem der Ansprüche 5 oder 6, **dadurch gekennzeichnet, dass** anschließend an die Umformstelle (6) eine Vorrichtung zum Erwärmen, insbesondere zum induktiven Erwärmen des Schneidenbereiches (2), und/oder zum Kaltwalzen und/oder zum Schleifen vorgesehen ist.

## Claims

1. A method of manufacturing a cutting tool, especially saws, cutting rules or punching tools, comprising a strip-shaped or disc-shaped carrier material (1), to the substantially upright edge of which a cutting-edge region (2) in the form of a powdered alloy is applied and, during application, melted, preferably by means of a laser beam, and solidifies on the edge, **characterised in that**, in the region of the carrier material (1) in which powdered material has already been applied and in which solidification is taking place, the cutting-edge region undergoes hot working.

2. A method according to claim 1, **characterised in that** the hot-working process is applied to the outer contour of the cutting-edge region, at least substantially the regions projecting beyond the thickness of the carrier material.

3. A method according to claim 1 or 2, **characterised in that** the hot-working process brings the outer contour of the cutting-edge region substantially into the desired final shape.

4. A method according to any one of the preceding claims, **characterised in that** the hot-working process is following by heating of at least the cutting-edge region (2) and/or cold rolling and/or grinding.

5. A device for carrying out the method according to any one of claims 1 to 4, **characterised in that**, seen in the direction of the relative movement between the carrier material and the fusion point (4) of the metal powder, a working point (6), at which the cutting-edge region (2) of the blank (10) is hot-worked by cylinders or rollers (7), is provided behind the fusion point (4),

6. A device according to claim 5, **characterised in that** the working point (6) is arranged in a region in which the cutting-edge region (2) of the blank (10) has a temperature just below the melting temperature of its alloy.

7. A device according to either one of claims 5 and 6, **characterised in that** a device for heating, especially inductively heating the cutting-edge region (2) and/or for cold rolling and/or for grinding is provided after the working point (6).

## Revendications

1. Procédé de fabrication d'un outil d'usinage par enlèvement de copeaux, en particulier, des scies, des filets coupants ou des lames à perforer, formé par un matériau de support (1) sous forme de feuillard ou sous forme de disque, sur lequel une zone de tranchant (2) est déposée, sous forme d'alliage en poudre, sur l'arête disposée essentiellement de chant et, au cours de l'application, est mise en fusion, de préférence au moyen d'un faisceau laser, et se solidifie sur l'arête, **caractérisé en ce que**, dans la zone du matériau de support (1) comportant le matériau en poudre déjà déposé, dans laquelle la solidification de ce dernier a lieu la zone de tranchant (2) est soumise à une déformation à chaud.

2. Procédé selon la revendication 1, **caractérisé en ce que** la déformation à chaud s'applique au contour extérieur de la zone de tranchant, au moins pour l'essentiel aux zones en saillie au-dessus de l'épaisseur du matériau support (1).

3. Procédé selon la revendication 1 ou 2, **caractérisé en ce que** la déformation à chaud amène le contour extérieur de la zone de tranchant essentiellement dans la forme finale souhaitée.

4. Procédé selon l'une quelconque des revendications précédentes, **caractérisé en ce que**, consécutivement à la déformation à chaud, sont effectués un chauffage au moins de la zone de tranchant (2) et/ou un laminage à froid et/ou une rectification.

5. Dispositif pour la mise en oeuvre du procédé selon l'une quelconque des revendications 1 à 4, **caractérisé en ce que**, dans le sens du mouvement relatif entre le matériau de support et la zone de soudure (4) de la poudre métallique, est prévue une zone de déformation (6), qui est située derrière la zone de soudure (4) et dans laquelle la zone de tranchant (2) de l'ébauche (10) est déformée à chaud par des galets ou des cylindres (7).

6. Dispositif selon la revendication 5, **caractérisé en ce que** la zone de déformation (6) est agencée dans une zone, dans laquelle la zone de tranchant (2) de l'ébauche (10) est à une température très légèrement inférieure à la température de fusion de son alliage.

7. Dispositif selon l'une des revendications 5 ou 6, **caractérisé en ce qu'**il est prévu à la suite de la zone de déformation (6), un dispositif de chauffage, en particulier pour le chauffage par induction de la zone de tranchant (2), et/ou de laminage à froid et/ou de rectification.
